# EUROPEAN PATENT SPECIFICATION

(11) **EP 3 097 575 B1**
(45) Date of publication and mention of the grant of the patent: **01.03.2023**
(21) Application number: 14880084.0
(22) Date of filing: 24.01.2014
(51) Int. Cl.: H01H 9/52, H01H 33/64, H02B 1/56, H05K 7/20, H02G 5/10

(54) **COOLING DEVICE FOR A GAS INSULATED SWITCHGEAR**
KÜHLVORRICHTUNG FÜR EINE GASISOLIERTE SCHALTANLAGE
DISPOSITIF DE REFROIDISSEMENT POUR UN APPAREILLAGE DE COMMUTATION ISOLÉ AU GAZ

(43) Date of publication of application: 30.11.2016
(73) Proprietor: ABB Schweiz AG, 5400 Baden (CH)
(72) Inventor: ZHUANG, Genhuang, Xiamen Fujian 361008 (CN); SUBBIAH THEVAR, Dukkaiappan, I-24124 Bergamo (IT); ZHANG, Yan, Beijing 100015 (CN); QUE, Yinzhong, Xiamen Fujian 361015 (CN)
(74) Representative: Zimmermann & Partner Patentanwälte mbB
(86) International application number: PCT/CN2014/071308
(87) International publication number: WO 2015/109508

(56) References cited:
- EP-A1- 1 737 009
- EP-A1- 2 494 568
- WO-A1-2012/161930
- WO-A1-2013/139666
- CN-A- 102 386 580
- CN-A- 102 656 654
- CN-C- 100 570 781
- CN-U- 202 978 035
- GB-A- 1 390 908
- JP-A- H0 330 400

## Description

### FIELD OF THE INVENTION

This invention relates to the field of power products, and more particularly to a Gas Insulated Switchgear device cooling technology field.

### BACKGROUND OF THE INVENTION

Heat dissipation is a well-known bottleneck in high rated current switchgears. As the gas insulated switchgears are all completely sealed, the temperature rise in the switchgear is very serious. The heat can only be dissipated via the air outside of the gas chamber. During long time operation under heavy current load, the heat accumulates gradually and makes the gas chamber internal temperature rise rapidly.

The current solutions to solve above mentioned problem mainly focus on two points. 1) Reduce the heat productivity. 2) Increase the heat dissipation. To reduce the heat productivity, we can increase the cross section area of the conductors, and increase the size of the gas chamber. However, all these solution will increase the footprint space and the cost.

To increase the heat dissipation, the current solution, such as to solve 2500A temperature rise in gas insulated product, is forced cooling by fan, and the temperature rise value of the most critical point is rather close to the limitation. Furthermore, another considering point is the service life of the fan and reliability, since gas insulated switchgear is maintenance free product.

EP 1 737 009 A1 discloses an electrical device with a conductor which is arranged in a housing. An evaporator is arranged on the conductor and connected to a condenser, which is placed at the outside of the housing, via a heat pipe.

JP H03 30400 A describes a cooling device for a gas insulation cubicle. The cooling device for a Gas Insulated Switchgear comprises a condenser arranged outside a gas chamber and an evaporation part arranged in the gas chamber, a gas filling the gas chamber, and at least one fluid conduit connecting the evaporation part and the condenser. The fluid conduit is heat conductive and is filled with liquid to transfer heat from the evaporation part to the condenser, and wherein the evaporation part is in contact with the gas filling the gas chamber on all sides.

WO 2011 / 051200 A1 discloses a device for cooling a medium voltage apparatus using heat pipes. A switchgear is placed within a sheath, which is in direct contact with evaporators of the heat pipes. The heat pipes further connect to condensers outside of a casing housing the switchgear.

Thus, it is much valuable to provide a more efficiency, reliable and low-cost heat dissipation solution for a Gas Insulated Switchgear.

### SUMMARY OF THE INVENTION

The above problem is solved by the subject-matter of the independent claim 1. The dependent claims define further embodiments.

The present invention provides a cooling device used for a Gas Insulated Switchgear. The cooling device comprises a condenser arranged outside the gas chamber, an evaporation part arranged in the gas chamber, and at least one fluid conduit connect the evaporator device and the condenser; the fluid conduit is heat conductive and is filled with liquid, especially a kind of low-boiling condensate, to transfer heat from the evaporation part to the condenser and hot evaporation can condense to liquid then flow back to the conduit for next cooling cycle.

According to the present invention, the evaporation part and the at least one fluid conduit are integrated together, and the evaporation part is the gas chamber end of the at least one fluid conduit. The fluid conduit can be only one fluid pipe or a plurality of fluid pipes.

According to the preferred embodiment, the condenser comprises a heat sink which is connected with the fluid conduit and is arranged outside of the gas chamber.

According to a second preferred embodiment of the present invention, the condenser is a separated part and it is liquid connective with all the fluid conduits. Thus the low-boiling condensate can flow among the fluid conduits and the condenser.

According to the preferred embodiments, the exterior outline of the fluid conduit can be round, square, elliptical, with sheds or any other shapes.

According to the preferred embodiments, the cross section of the fluid conduit can be round, annular, or a shape of the external outline different with the internal outline.

A fluid conduit is easy to get and the heat dissipation efficiency is high enough, it is easy to implement the solution according to the present invention to a Gas Insulated Switchgear.

According to a preferred embodiment, the condenser is arranged on the top of the gas chamber or at the back of the gas chamber. The fluid conduit may comprise an angle and is adapted to connect the condenser with the evaporation part.

According to a preferred embodiment, the condenser end of the fluid conduit is open.

### BRIEF DESCRIPTION OF THE DRAWINGS

The subject matter of the invention will be explained in more details in the following description with reference to preferred exemplary embodiments which are illustrated in the drawings, in which:
Fig. 1A shows the structure of the cooling device according to the present invention; Fig. 1B shows the switchgear equipped with a cooling device;
Fig. 2 is the section view of the switchgear switchgear equipped with a cooling device;
Fig. 3A-3B shows the structure of the cooling device that is not according to the present invention;
Fig. 4A shows the exterior outline of the fluid conduit is square; Fig. 4B shows the exterior outline of the fluid conduit is round; and Fig. 4C shows the exterior outline of the fluid conduit is with sheds;
Fig. 5 shows the fluid conduit is designed to comprise a hollow part to increase the contact of the fluid conduit with the SF6 in the gas chamber, according to the present invention.
Fig. 6 is the section view in A-A direction of Fig. 5; the cross section of fluid conduit can be round, square ring as shown in Fig. 6A shows the cross section of fluid conduit is square ring; Fig. 6B and Fig. 6C show the cross section of fluid conduit is non-regular;
Fig. 7A shows the condenser is arranged on the top of the gas chamber; Fig. 7B shows the condenser is arranged at the back of the gas chamber.

### DETAILED DESCRIPTION OF PREFERRED EMBODIMENTS

With reference to the above-mentioned figures, a preferred embodiment of the present invention is provided.

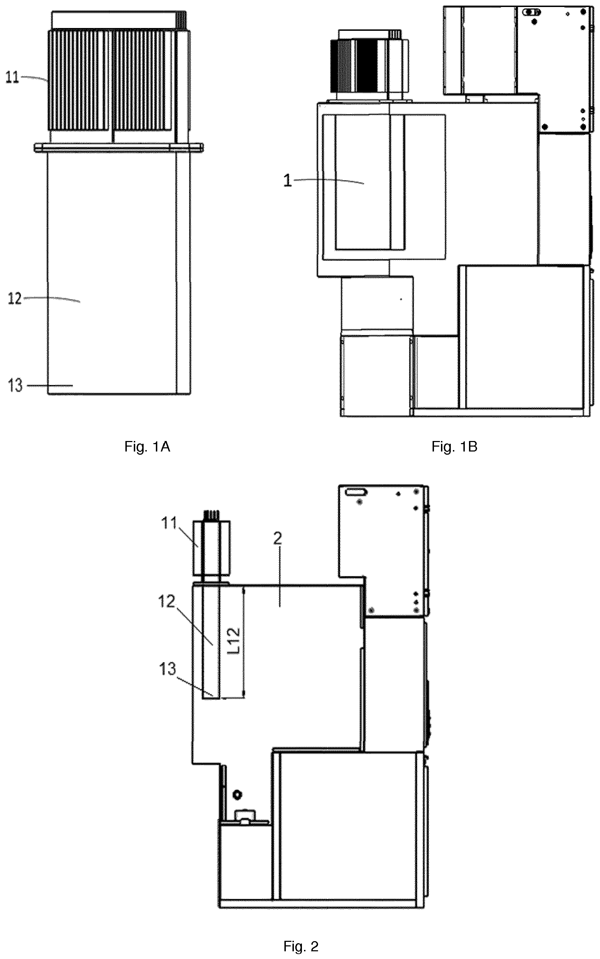

As shown in Fig.1A-1B and Fig.2, the present invention provides a cooling device 1 used for a Gas Insulated Switchgear which is filled with gas such as SF6 in the gas chamber 2. Fig. 1A shows the structure of the cooling device 1 according to the present invention. Fig. 1B shows the switchgear equipped with a cooling device 1. The cooling device 1 comprises a condenser 11 arranged outside the gas chamber 2, an evaporation part 13 arranged in the gas chamber, and at least one fluid conduit 12 connect the evaporator device 13 and the condenser 11. The fluid conduit 11 is heat conductive and is filled with liquid 120, especially a kind of low-boiling condensate, to transfer heat from the evaporation part 13 to the condenser 11.

According to the present invention, as shown in Fig. 1A-1B, the evaporation part 13 and the at least one fluid conduit 12 is integrated together, and the evaporation part 13 is the gas chamber end of the at least one fluid conduit 12. The fluid conduit 12 has two ends. The gas chamber end of the at least one fluid conduit 12 means the end of the fluid conduit 12 which is located at the gas chamber side, and the condenser end of the fluid conduit means the end of the fluid conduit 12 which is located at the condenser side.

The condenser 11 comprising a plurality of heat sinks 110 which is arranged around of the fluid conduit 12 outside of the gas chamber 2. Or the heat sink provides an opening which is adapted to close connect with the top opening of the fluid conduit 12. The fluid conduit 12 is made of high thermal conductive materials, such as copper and aluminium

Under the gravity, the low-boiling condensate 120 in the fluid conduit 12 flow to the evaporation part 13 which is the bottom of the fluid conduit 12 when the temperature of the gas chamber 2 is not high. During the long time operation of the switchgear under heavy current load, the internal temperature of the gas chamber 2 raise gradually. The low-boiling condensate 120 in the evaporation part 13 is heated and evaporated gradually. The high temperature evaporated condensate rise to the heat sink 11 through the fluid conduit 12. The evaporated condensate will be cooled down by the heat sink 11 through heat transfer from the condensate to the heat sink, and then from the heat sink to the air. The evaporated condensate will be condensed to liquid, and then flows to the evaporation part 13 again.

Through above mechanism and process, the temperature of the gas chamber 2 is cooled down.

According to the present invention, the evaporation part 13 and the at least one fluid conduit 12 are integrated together. That means the gas chamber end of the fluid conduit 12 functions both as fluid conduit and the evaporation part. This structure is simple and compact, and it also saves cost.

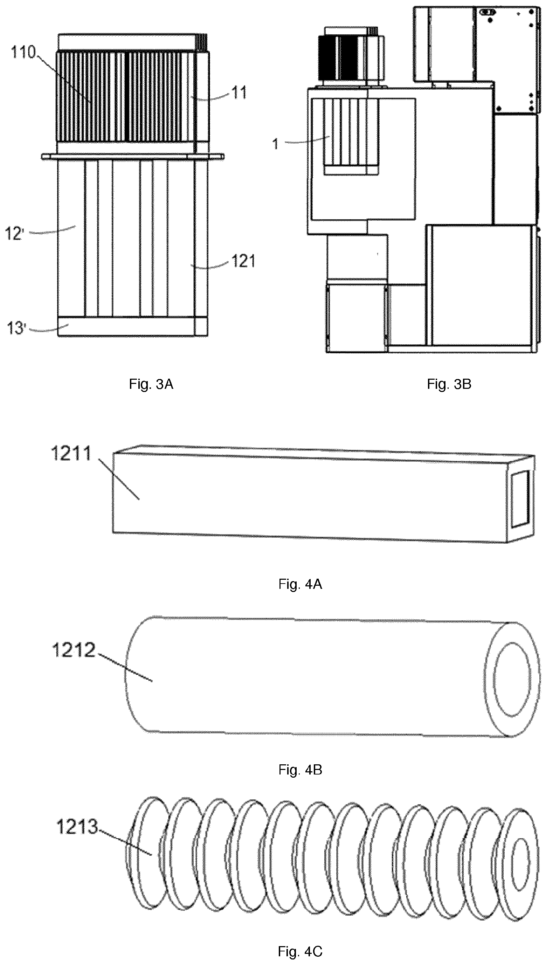

Fig. 2 is the section view of the switchgear equipped with a cooling device . The length L12 of the fluid conduit 12 can be varied. Fig. 3A-3B shows the structure of the cooling device 1.

The fluid conduit 12 comprises a plurality of fluid pipes 12' which are separated with each other. The evaporation part 13' is a separate structure with the fluid pipes 12'. The bottom end of the plurality of fluid pipes 12' are liquid connective with each other and liquid connective with the evaporation part 13'.

Similar to the mechanism described above the low-boiling condensate 120 in the fluid pipes 12' flow to the evaporation part 13' when the temperature of the gas chamber 2 is not high. During the long time operation of the switchgear under heavy current load, the internal temperature of the gas chamber 2 raise gradually. The low-boiling condensate 120 in the evaporation part 13' is heated and evaporated gradually. The high temperature evaporated condensate rise to the heat sink 11 through the fluid pipes 12'. The evaporated condensate will be cooled down by the heat sink 11 through heat transfer between the evaporated condensate and the air, and will be condensed to liquid. Then, the condensate flows to the evaporation part 13' again via the fluid pipes 12'.

In this preferred embodiment, there are several fluid pipes 12'. Thus, the heat transfer and heat dissipation efficiency is highly increased.

According to the other more preferred embodiments, the exterior outline of the fluid conduit can be many shapes as shown in Fig. 4A-4C. Fig. 4A shows the exterior outline of the fluid conduit 12 is square 1211; Fig. 4B shows the exterior outline of the fluid conduit is round 1212; and Fig. 4C shows the exterior outline of the fluid conduit is with sheds 1213. Of course exterior outline of the fluid conduit 12 can be varied from many other shapes such as elliptical which are not shown here. In these preferred embodiments, for example, the exterior outline of the fluid conduit with sheds 1213 can increase the contact of the fluid conduit 12 with gas filled in the gas chamber such as SF6. Then, the heat transfer and heat dissipation efficiency is highly increased. Furthermore, the internal space of the fluid conduit 12 decreased and less the low-boiling condensate 120 needed. Thus the cost is saved.

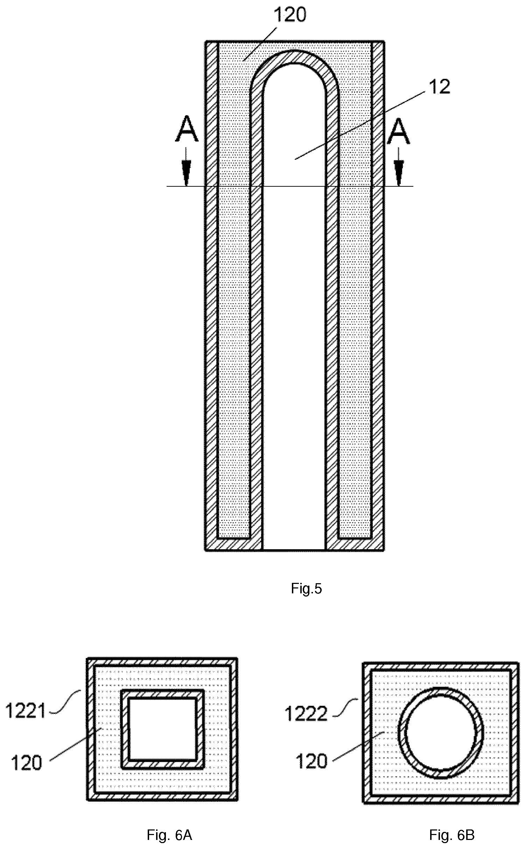

The fluid conduit according to the invention is designed to comprise a hollow part to increase the contact of the fluid conduit 12 with the SF6 in the gas chamber and thus to increase the heat transfer and heat dissipation efficiency as shown in Fig. 5.

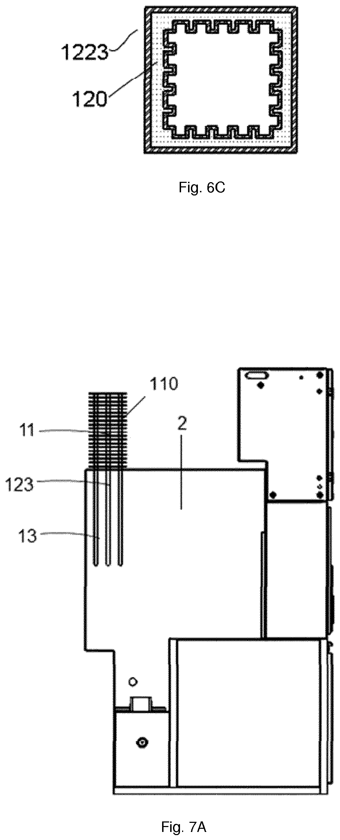

Fig. 6 is the section view in A-A direction of Fig. 5. The cross section of fluid conduit 12 can be round, square ring 1221 as shown in Fig. 6A, or a shape of the external outline different with the internal outline 1222, 1223 as shown in Fig. 6B and Fig. 6C, or any other shapes.

The fluid conduit 12 can be located anywhere in the gas chamber 2. The preferred location is in not close to a gas chamber wall, thus to increase the contact with the SF6 in the gas chamber.

Fig. 7A-7B shows the cooling device of an embodiment of the present invention, wherein a heat conduit 123 is used. A heat conduit or heat pipe is a heattransfer device that combines the principles of both thermal conductivity and phase transition to efficiently manage the transfer of heat between two solid interfaces. At the hot interface of a heat conduit a liquid in contact with a thermally conductive solid surface turns into a vapor by absorbing heat from that surface. The vapor then travels along the heat conduit to the cold interface and condenses back into a liquid - releasing the latent heat. The liquid then returns to the hot interface through either capillary action, centrifugal force, or gravity, and the cycle repeats. Heat conduits are thermal superconductors, due to the very high heat transfer coefficients for boiling and condensation. The effective thermal conductivity varies with heat conduit length, and can approach 100,000 W/m K for long heat conduits, in comparison with approximately 400 W/m K for copper.

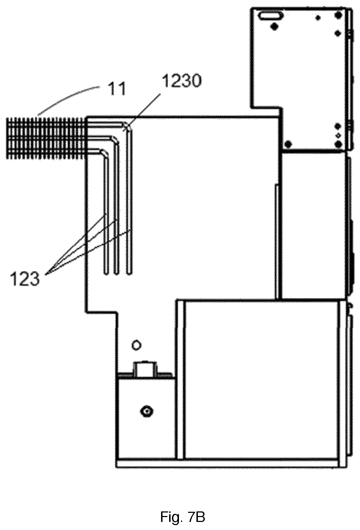

The heat conduit 123 functions both as fluid conduit and the evaporation part. The condenser 11 comprising a plurality of heat sinks 110 which is arranged around of the fluid conduit 123 outside of the gas chamber 2. As shown in Fig. 7A, the condenser 11 is arranged on the top of the gas chamber 2. Or as shown in Fig. 7B, the condenser 11 is arranged at the back of the gas chamber 2, wherein the heat conduit 123 comprising an angle 1230 and is adapted to connect the condenser with the evaporation part 13. The condenser 11 can also be arranged at the side of the gas chamber 2.

The cooling device of the present invention is simple and high efficiency in heat transfer and heat dissipation. To implement the cooling device of the invention, the Gas Insulated Switchgear does not need to do much modification. The cooling device of the present invention is also high reliable and low cost.

Though the present invention has been described on the basis of some preferred embodiments, those skilled in the art should appreciate that those embodiments should by no means limit the scope of the present invention as defined by the accompanied claims.

## Claims

1. A cooling device (1) for a Gas Insulated Switchgear comprising a condenser (11) arranged outside a gas chamber (2), further comprising an evaporation part (13) arranged in the gas chamber, a gas filling the gas chamber (2), and at least one fluid conduit (12) connecting the evaporation part (13) and the condenser (11); wherein the fluid conduit (12) is heat conductive and is filled with liquid (120) to transfer heat from the evaporation part (13) to the condenser (11), and wherein the evaporation part (13) is in contact with the gas filling the gas chamber (2) on all sides, the fluid conduit (12) comprising a hollow part at a gas chamber end to increase the contact of the fluid conduit (12) with the gas in the gas chamber (2); and wherein the evaporation part (13) and the at least one fluid conduit (12) are integrated together, and the evaporation part (13) is the gas chamber end of the at least one fluid conduit (12).

2. The cooling device according to claim 1, wherein the condenser (11) comprising a heat sink (110) which is connected with the fluid conduit (12) and is arranged outside of the gas chamber (2) .

3. The cooling device according to claim 1, wherein the liquid (120) filled in the fluid conduit is low-boiling condensate.

4. The cooling device according to any one of claim 1-3, wherein the condenser (11) is a separated part and it is liquid connective with all the fluid conduits (12).

5. The cooling device according to any one of claim 1-3, wherein the exterior outline of the fluid conduit (12) is round (1211), square (1212), elliptical or with sheds (1213).

6. The cooling device according to any one of claim 1-3, wherein cross section of the fluid conduit is round, annular, square ring shaped (1221), or a shape of the external outline different with the internal outline (1222, 1223).

7. The cooling device according to any one of claim 1-3, wherein the fluid conduit (12) is a heat pipe (123) comprising an angle (1230) and is adapted to connect the condenser with the evaporation part (13).

8. The cooling device according to any one of claim 1-3, wherein the condenser (11) is arranged on the top of the gas chamber (2) or at the back of the gas chamber (2).

9. The cooling device according to any one of claim 1-3, wherein the condenser end of the fluid conduit (12) is open.

10. The cooling device according to any one of claim 1-3, wherein the fluid conduit (12) is made of thermal conductive materials.

## Patentansprüche

1. Kühlvorrichtung (1) für eine gasisolierte Schaltanlage, umfassend einen Kondensator (11), der außerhalb einer Gaskammer (2) angeordnet ist, ferner umfassend einen Verdampfungsteil (13), der in der Gaskammer angeordnet ist, ein Gas, das die Gaskammer (2) füllt, und mindestens eine Fluidleitung (12), die den Verdampfungsteil (13) und den Kondensator (11) verbindet; wobei die Fluidleitung (12) wärmeleitend ist und mit Fluid (120) gefüllt ist, um Wärme von dem Verdampfungsteil (13) zu dem Kondensator (11) zu übertragen, und wobei der Verdampfungsteil (13) auf allen Seiten mit dem die Gaskammer (2) füllenden Gas in Kontakt ist, wobei die Fluidleitung (12) einen hohlen Teil an dem Gaskammerende aufweist, um den Kontakt der Fluidleitung (12) mit dem Gas in der Gaskammer (2) zu erhöhen; und wobei der Verdampfungsteil (13) und die mindestens eine Fluidleitung (12) zusammen integriert sind, und der Verdampfungsteil (13) das Gaskammerende der mindestens einen Fluidleitung (12) ist.

2. Kühlvorrichtung nach Anspruch 1, wobei der Kondensator (11) eine Wärmesenke (110) umfasst, die mit der Fluidleitung (12) verbunden ist und außerhalb des Gasraums (2) angeordnet ist.

3. Kühlvorrichtung nach Anspruch 1, wobei das in die Fluidleitung eingefüllte Fluid (120) niedrig siedendes Kondensat ist.

4. Kühlvorrichtung nach einem der Ansprüche 1 bis 3, wobei der Kondensator (11) ein separates Teil ist und mit allen Fluidleitungen (12) fluidverbunden ist.

5. Kühlvorrichtung nach einem der Ansprüche 1 bis 3, wobei der äußere Umriss der Fluidleitung (12) rund (1211), quadratisch (1212), elliptisch oder mit Rillen (1213) ist.

6. Kühlvorrichtung nach einem der Ansprüche 1 bis 3, wobei der Querschnitt der Fluidleitung rund, ringförmig, quadratisch (1221), oder eine andere Form des äußeren Umrisses als die des inneren Umrisses (1222, 1223) ist.

7. Kühlvorrichtung nach einem der Ansprüche 1 bis 3, wobei die Fluidleitung (12) ein Wärmerohr (123) ist, das einen Winkel (1230) aufweist und geeignet ist, den Kondensator mit dem Verdampfungsteil (13) zu verbinden.

8. Kühlvorrichtung nach einem der Ansprüche 1-3, wobei der Kondensator (11) an der Oberseite des Gasraums (2) oder an der Rückseite des Gasraums (2) angeordnet ist.

9. Kühlvorrichtung nach einem der Ansprüche 1 bis 3, wobei das Kondensatorende der Fluidleitung (12) offen ist.

10. Kühlvorrichtung nach einem der Ansprüche 1 bis 3, wobei die Fluidleitung (12) aus wärmeleitenden Materialien besteht.

## Revendications

1. Dispositif de refroidissement (1) pour un appareillage de commutation à isolation gazeuse, comprenant un condenseur (11) agencé à l'extérieur d'une chambre de gaz (2), comprenant en outre une partie d'évaporation (13) agencée dans la chambre de gaz, un gaz remplissant la chambre de gaz (2), et au moins un conduit de fluide (12) raccordant la partie d'évaporation (13) et le condenseur (11) ; dans lequel le conduit de fluide (12) est conducteur de chaleur et est rempli avec un liquide (120) pour transférer de la chaleur, depuis la partie d'évaporation (13), au condenseur (11), et dans lequel la partie d'évaporation (13) est en contact avec le gaz remplissant la chambre de gaz (2) sur tous les côtés, le conduit de fluide (12) comprenant une partie creuse à une extrémité chambre de gaz pour augmenter le contact du conduit de fluide (12) avec le gaz dans la chambre de gaz (2) ; et dans lequel la partie d'évaporation (13) et l'au moins un conduit de fluide (12) sont intégrés ensemble, et la partie d'évaporation (13) est l'extrémité chambre de gaz de l'au moins un conduit de fluide (12).

2. Dispositif de refroidissement selon la revendication 1, dans lequel le condenseur (11) comprend un dissipateur de chaleur (110) qui est raccordé au conduit de fluide (12) et est agencé à l'extérieur de la chambre de gaz (2).

3. Dispositif de refroidissement selon la revendication 1, dans lequel le liquide (120) remplissant le conduit de fluide est un condensat à bas point d'ébullition.

4. Dispositif de refroidissement selon l'une quelconque de la revendication 1 à 3, dans lequel le condenseur (11) est une partie séparée et il est raccordable de façon liquide à tous les conduits de fluide (12).

5. Dispositif de refroidissement selon l'une quelconque de la revendication 1 à 3, dans lequel le contour extérieur du conduit de fluide (12) est rond (1211), carré (1212), elliptique ou avec des striures (1213).

6. Dispositif de refroidissement selon l'une quelconque de la revendication 1 à 3, dans lequel une section transversale du conduit de fluide est ronde, annulaire, en forme de bague carrée (1221), ou une forme du contour externe différente par rapport au contour interne (1222, 1223).

7. Dispositif de refroidissement selon l'une quelconque de la revendication 1 à 3, dans lequel le conduit de fluide (12) est un caloduc (123) comprenant un angle (1230) et est adapté pour raccorder le condenseur à la partie d'évaporation (13).

8. Dispositif de refroidissement selon l'une quelconque de la revendication 1 à 3, dans lequel le condenseur (11) est agencé sur le haut de la chambre de gaz (2) ou à l'arrière de la chambre de gaz (2).

9. Dispositif de refroidissement selon l'une quelconque de la revendication 1 à 3, dans lequel l'extrémité condenseur du conduit de fluide (12) est ouverte.

10. Dispositif de refroidissement selon l'une quelconque de la revendication 1 à 3, dans lequel le conduit de fluide (12) est fait de matériaux thermoconducteurs.
